# EUROPÄISCHE PATENTSCHRIFT

(11) **EP 3 007 430 B1**
(45) Veröffentlichungstag und Bekanntmachung des Hinweises auf die Patenterteilung: **11.01.2017**
(21) Anmeldenummer: 14188434.6
(22) Anmeldetag: 10.10.2014
(51) Int. Cl.: H04N 5/235, G01J 3/46

(54) **Kamerasystem und Verfahren zur Inspektion und/oder Vermessung von Objekten**
Camera system and a method for inspection and/or measurement of objects
Système de caméra et procédé d'inspection et/ou de mesure d'objets

(43) Veröffentlichungstag der Anmeldung: 13.04.2016
(73) Patentinhaber: SICK AG, 79183 Waldkirch/Breisgau (DE)
(72) Erfinder: Schneider, Florian, 79276 Reute (DE)
(74) Vertreter: Manitz, Finsterwald & Partner GbR

(56) Entgegenhaltungen:
- JP-A- 2003 009 162
- JP-A- 2004 056 531
- US-A1- 2002 181 733
- US-A1- 2006 251 408
- US-A1- 2013 088 148
- US-A1- 2014 030 670

## Beschreibung

Die Erfindung betrifft ein Verfahren zur Inspektion und/oder Messung von Objekten in einer Umgebung, mit einem Kamerasystem, das einen Farbbildsensor, eine Objektivanordnung vor dem Farbbildsensor zur Abbildung eines Objektes aus der Umgebung auf dem Farbbildsensor und wenigstens eine Aufnahme-Beleuchtungslichtquelle, mit der die Umgebung mit nicht-monochromatischem Licht beleuchtet werden kann, umfasst.

Der Begriff der Inspektion bzw. der Vermessung ist dabei so zu verstehen, dass die Anwesenheit bzw. Abwesenheit, die Dimensionen oder physikalische Eigenschaften wie z.B. die Farbe, festgestellt werden.

Bei der Inspektion und Vermessung von Objekten werden zunehmend Kamerasysteme eingesetzt. Wenn es sich dabei um Inspektionsanwendungen mit Farbbildsensoren handelt, die es ermöglichen, die Farbe der Objekte in drei Kanälen (Rot, Grün, Blau) wiederzugeben, muss ein Weißlichtabgleich durchgeführt werden (also ein Einlernen der Sendespektren und/oder eine Berücksichtigung der spektral unterschiedlichen Bildsensorempfindlichkeit), um die korrekte Aufnahme der Farbtöne zu gewährleisten. Dies ist insbesondere notwendig, weil z.B. die unterschiedlichen Beleuchtungs-LEDs für unterschiedliche Wellenlängen unterschiedliche optische Leistungsdichte haben und andererseits die Quantenausbeute eines Bildsensors für unterschiedliche Farbkanäle unterschiedlich hoch sein kann.

Zum Weißlichtabgleich wird typischerweise ein Referenzobjekt in die von dem Kamerasystem erfasste Umgebung gebracht, das homogene Remission aufweist. Bei einem solchen Prozess wird ein Bild des Referenzobjektes aufgenommen und im Anschluss die drei Farbkanäle des Bildsensors (Rot, Grün, Blau) durch eine individuelle Verstärkung bzw. einen individuellen Offset auf einen einheitlichen Signalpegel gebracht. Im späteren Betrieb wird jedes aufgenommene Bild dann mit entsprechenden Werten korrigiert, um eine möglichst gute Farbtreue zu erhalten. Der Einfluss des Umgebungslichtes kann nach Aufnahme mehrerer Bilder mit und ohne Kamerabeleuchtung herausgerechnet bzw. berücksichtigt werden. Insofern ist die Farbtreue von derartigen Kamerasystemen von der Qualität des Weißlichtabgleichs und insbesondere auch von der Stabilität der spektralen Beleuchtungseigenschaften abhängig. Insbesondere die Beleuchtungseigenschaften können sich jedoch während des Betriebes verändern.

So kann es beim Betrieb zu einer Alterung der verwendeten Beleuchtungs-LEDs kommen. Wenn also insbesondere mehrere LEDs (Rot, Grün und Blau) eingesetzt werden, kann es zu einer individuellen Alterung der Umwandlungseffizienz zwischen Elektronen in Photonen für die drei unterschiedlichen Farbkanäle kommen. Wird andererseits eine weiße LED als Beleuchtungs-LED eingesetzt, kann es zu ein Verschiebung des Spektrums insbesondere zu längeren Wellenlängen kommen.

Auch Temperatureffekte können zu einer spektralen Verschiebung führen. Bei Einsatz von mehreren Beleuchtungs-LEDs (Rot, Grün, Blau) kann es zu einer individuellen Temperaturabhängigkeit der Umwandlungseffizienz für die drei unterschiedlichen Farbkanäle kommen. Bei Verwendung einer Weißlicht-LED kann es hier zu einer Verschiebung insbesondere des Blau-Peaks in Richtung längerer Wellenlängen kommen.

Andererseits kann sich auch das Umgebungslicht (also das Fremdlichtspektrum) verändern. So kann es z.B. zu einem tageszeitabhängigen Einfluss von Sonnenlicht, einer Alterung oder einen Austausch einer künstlichen Umgebungsbeleuchtung oder zu einem Ein- und Ausschalten von Lampen in der Umgebung kommen.

Um diese Effekte zu berücksichtigen, muss der zeitaufwändige Weißlichtabgleich mit Referenzobjekten immer wieder auch während der eigentlichen Messung zyklisch wiederholt werden, wodurch die Messung signifikant verzögert wird.

US 2014/030670 A1 beschreibt eine Kamera zur Erzeugung eines Abbildes eines Zahnobjekts. LEDs mit verschiedenen Wellenlängen beleuchten den Zahn mit unterschiedlichen Wellenlängen.

Eine Abbildungsanordnung mit einem Aufnahmeelement gemäß JP 2003-009162 A umfasst ein Aufnahmeelement mit einer Objektivanordnung. Referenzlichtquellen sind vorgesehen, um die Verstärkung eines elektrischen Verstärkerkreises einzustellen.

US 2006/251408 A1 zeigt ein Bildverarbeitungssystem mit einem Aufnahmeelement mit einer Objektivanordnung davor. Die Szene kann mit Leuchtdioden unterschiedlicher Wellenlängen beleuchtet werden.

Weiterer Stand der Technik ist aus US 2013/088148 A1, US 2002/181733 A1 und JP 2004-56531 A beschrieben.

Aufgabe der Erfindung ist es, ein Verfahren zur Inspektion und/oder Vermessung von Objekten anzugeben, das eine geringe Temperatur- und Alterungsabhängigkeit gewährleistet.

Diese Aufgabe wird mit einem Verfahren mit den Merkmalen des Anspruchs 1 gelöst.

Bei dem erfindungsgemäß eingesetzten Kamerasystem ist zusätzlich zu der Aufnahme-Beleuchtungslichtquelle noch wenigstens eine interne Referenz-Beleuchtungslichtquelle vorgesehen, die derart angeordnet ist, dass der Farbbildsensor mit ihr beleuchtet werden kann, ohne dass das dazu von ihr abgestrahlte Licht durch die Objektivanordnung tritt.

Mit einem erfindungsgemäßen Verfahren ist es - wie es unten beschrieben wird - möglich, auf einen immer wieder durchzuführenden Weißlichtabgleich verzichten zu können und/oder die Alterungs- und Temperatureinflüsse zu berücksichtigen.

Zur Durchführung eines ersten erfindungsgemäßen Verfahrens ist vorgesehen, dass während des tatsächlichen Betriebes zyklische Zwischenbilder oder Teilzwischenbilder unter Beleuchtung des Farbbildsensors nur mit der wenigstens einen internen Referenz-Beleuchtungslichtquelle und ohne Beleuchtung mit der wenigstens einen Aufnahme-Beleuchtungslichtquelle aufgenommen und in Beziehung zu Bildern gesetzt werden, die unter Beleuchtung mit der wenigstens einen Aufnahme-Beleuchtungslichtquelle (gegebenenfalls ohne Beleuchtung mit der internen Referenz-Beleuchtungslichtquelle) aufgenommen werden. Dies ermöglicht auf einfache Weise, die Alterungs- und Temperatureffekte der wenigstens einen Aufnahme-Beleuchtungslichtquelle zu korrigieren, da bei gleicher Belastung der Aufnahme-Beleuchtungslichtquelle und der Referenz-Beleuchtungslichtquelle die gleichen Alterungseffekte zu erwarten sind. Außerdem sind die Beleuchtungslichtquellen in der Regel dem gleichen Temperatureinfluss ausgesetzt. Eine Änderung der spektralen Eigenschaften der Aufnahme-Beleuchtungslichtquelle wird sich also in gleicher Weise auch bei der Referenz-Beleuchtungslichtquelle widerspiegeln. Durch zyklischen Wechsel zwischen einer Beleuchtung der Umgebung mit der Aufnahme-Beleuchtungslichtquelle und einer Beleuchtung nur mit der Referenz-Beleuchtungslichtquelle, die innerhalb des Kamerasystems vorgesehen ist, kann also der Einfluss der Alterung und der Temperatur insbesondere der Aufnahme-Beleuchtungslichtquelle auf einfache Weise Berücksichtigung finden. Dann kann z.B. in einer entsprechenden Auswerteeinrichtung der Einfluss der Temperatur bzw. der Alterung bei Bildern, die unter Beleuchtung mit der Aufnahme-Beleuchtungslichtquelle aufgenommen werden, herausgerechnet werden, der sich in beiden Beleuchtungslichtquellen auf gleiche Weise niederschlägt.

Die interne Referenz-Beleuchtungslichtquelle und die wenigstens eine Aufnahme-Beleuchtungslichtquelle sind untereinander bau-und chargengleich. Auf diese Weise ist gewährleistet, dass die Umwelteinflüsse z.B. der Temperatur oder der Alterung bei beiden Beleuchtungslichtquellen gleiche Wirkung haben.

Eine Ausgestaltung sieht vor, dass sowohl die Aufnahme-Beleuchtungslichtquelle als auch die Referenz-Beleuchtungslichtquelle durch wenigstens eine LED gebildet werden, die einfach und kostengünstig sind. Vorzugsweise kommt jeweils eine Weißlicht-LED zum Einsatz, die einen einfachen Aufbau ermöglicht. Grundsätzlich können aber auch für die wenigstens eine Aufnahme-Beleuchtungslichtquelle und die wenigstens eine Referenz-Beleuchtungslichtquelle jeweils wenigstens drei Einzellichtquellen vorgesehen sein, die insbesondere rotes, grünes und blaues Licht abstrahlen, um weißes Licht zu simulieren.

Der Farbbildsensor, der bei dem erfindungsgemäßen Verfahren zum Einsatz kommt, kann z.B. durch ein entsprechend ausgestaltetes farbempfindliches CCD-Array gebildet sein. Alternativ kann der Farbbildsensor auch mehrere Fotodioden umfassen, die durch entsprechend vorgeschaltete Farbfilter (Rot, Grün und Blau) unterschiedliche Wellenlängen bevorzugt nachweisen.

Um die Berücksichtigung der Umwelteinflüsse ohne großen Rechenaufwand zu ermöglichen, sollte der Farbbildsensor von der internen Referenz-Beleuchtungslichtquelle möglichst spektral homogen ausgeleuchtet werden. Ansonsten werden Umrechnungsfunktionen für die unterschiedlichen spektralen Ausleuchtungsgrade notwendig.

Vorteilhafterweise wird die Referenz-Beleuchtungslichtquelle dazu in unmittelbarer Nachbarschaft des Farbbildsensors angeordnet.

So ist außerdem gewährleistet, dass die optische Bestrahlung des Bildsensors durch die Referenz-Beleuchtungslichtquelle aufgrund der räumlichen Nähe sehr hoch ist, so dass - insbesondere auch weil deswegen die Belichtungszeit bei einer Aufnahme unter Beleuchtung mit der Referenz-Beleuchtungslichtquelle kurz gehalten werden kann - Umwelteinflüsse nur geringeren Einfluss haben können.

Alternativ oder gleichzeitig ist vorteilhafterweise vorgesehen, dass die interne Referenz-Beleuchtungslichtquelle derart positioniert bzw. in ihrem Aufbau ausgestaltet ist, dass der Farbbildsensor spektral homogen ausgeleuchtet wird. Gegebenenfalls können hier zusätzliche Diffusoren eingesetzt werden oder die Restreflexion eines gegebenenfalls in dem Kamerasystem vorgesehenen optischen Filters ausgenutzt werden, um die homogene Ausleuchtung des Farbbildsensors durch das Licht der Referenz-Beleuchtungslichtquelle zu gewährleisten.

Noch einfacher wird der Aufbau, wenn sich im Strahlengang zwischen der wenigstens einen internen Referenz-Beleuchtungslichtquelle und dem Farbbildsensor keine zu durchstrahlenden optischen Elemente befinden, so dass solche Elemente keinen Einfluss auf die Temperatur- oder Alterungseinflüsse haben können.

Eine vorteilhafte Verfahrensführung gemäß Anspruch 6 sieht vor, dass vor dem Betrieb (i) ein Bild eines bekannten Referenzobjekts unter Beleuchtung mit der wenigstens einen Aufnahme-Beleuchtungslichtquelle und (ii) ein Bild eines bekannten Referenzobjekts ohne Beleuchtung vorgenommen wird. Mit diesen beiden Messungen kann zunächst der Einfluss des Fremdlichts, also des Umgebungslichts bestimmt werden. Außerdem wird (iii) ein Bild unter Beleuchtung nur mit der wenigstens einen internen Referenz-Beleuchtungslichtquelle aufgenommen. Auf diese Weise lassen sich auch noch die Eigenschaften des Objektivs herausrechnen und berücksichtigen.

Als Resultat erhält man Korrekturwerte für den ersten Weißlichtabgleich und kann die Farbeigenschaften sowohl des Objektivs als auch des Fremdlichts ermitteln.

Mit dem erfindungsgemäßen Verfahren können während des eigentlichen Betriebes zyklisch Zwischenbilder unter Beleuchtung des Farbbildsensors nur mit der wenigstens einen internen Referenz-Beleuchtungslichtquelle aufgenommen werden und in Beziehung zu mit der wenigstens einen Aufnahme-Beleuchtungslichtquelle aufgenommenen Bildern gesetzt werden, um Alterungs- und Temperatureffekte der wenigstens einen Aufnahme-Beleuchtungslichtquelle während des Betriebes zu korrigieren.

Bei dem erfindungsgemäßen Verfahren kann es von Vorteil sein, wenn jeweils nur die Daten von einem Teil des Farbbildsensors ausgelesen werden, um z.B. einer sich schnell ändernden Umgebung oder eines sich schnell bewegenden Objektes gerecht werden zu können.

Um den Einfluss einer gegebenenfalls auftretenden Änderung des Fremdlichtpegels oder der spektralen Eigenschaften des Fremdlichts zu berücksichtigen, können zyklische Hell-/Dunkelbilder der Umgebung (also mit und ohne Beleuchtung durch die Aufnahme-Beleuchtungslichtquelle und ohne Beleuchtung mit der Referenz-Lichtlichtquelle) aufgenommen werden.

Bei einer Ausgestaltung des erfindungsgemäßen Verfahrens werden während des Betriebes zyklisch Zwischenbilder unter Beleuchtung des Farbbildsensors nur mit der wenigstens einen internen Referenz-Beleuchtungslichtquelle aufgenommen, um zum Beispiel eine gegebenenfalls vorhandene räumliche Ungleichmäßigkeit der spektralen Empfindlichkeit des Farbbildsensors korrigieren zu können, die zum Beispiel auch alters- und temperaturabhängig sein kann.

Zusätzlich zum beschriebenen Farbbildsensor und hinter der Objektivanordnung kann eine Anordnung von Lichtempfängern unterschiedlicher spektraler Empfindlichkeit, vorzugsweise ebenfalls in der Nachbarschaft des Farbbildsensors vorgesehen sein. "Hinter" soll hier so verstanden werden, dass das von der Referenz-Beleuchtungslichtquelle abgestrahlte Licht den Farbbildsensor erreichen kann, ohne durch die Objektivanordnung zu treten. Eine einfache Ausgestaltung sieht dafür einen Anordnung aus drei Fotodioden mit vorgeschalteten spektralen Farbfiltern (Rot, Grün und Blau) vor. Dann kann über ein spektrale Streulichtanalyse im Kamerasystem die spektrale Verteilung des Lichtes in den belichteten und unbelichteten Zeitbereichen analysiert und geprüft werden.

Eine solche Ausgestaltung ermöglicht zusätzlich eine weitere Berücksichtigung der spektralen Eigenschaften sowohl des Farbbildsensors als auch der Aufnahme-Beleuchtungslichtquelle, z.B. um eine weitere Kontrollmöglichkeit bereitzustellen.

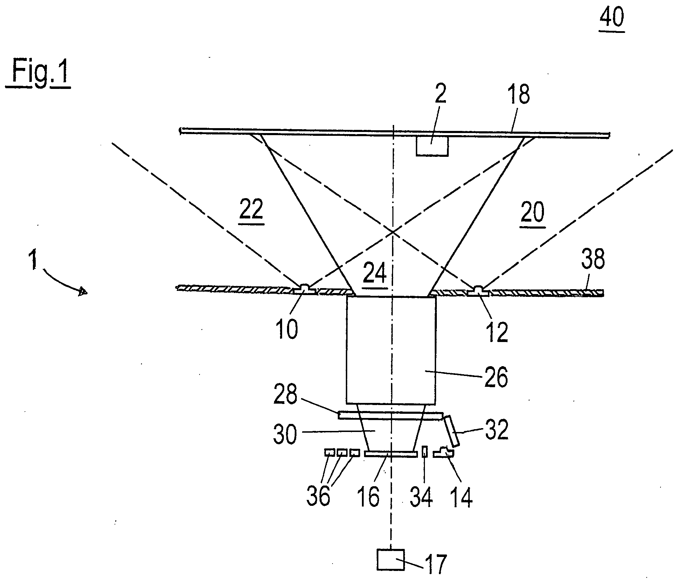

Die Erfindung wird anhand der beiliegenden schematischen Figur im Detail erläutert. Dabei zeigt
- Fig. 1: ein Kamerasystem zum Einsatz mit einem erfindungsgemäßen Verfahren.

In Fig. 1 ist ein Kamerasystem 1 schematisch dargestellt. Beobachtet wird dabei eine Umgebung 40, in der sich z.B. ein Objekt 2 befindet. Bei der hier gezeigten Ausgestaltung befindet sich das Objekt 2 auf einer Fläche 18, wie z.B. einem Förderband oder einem Regalhalter oder ähnlichem. Das Kamerasystem 1 ist hier in einem Gehäuse angeordnet, von dem die Frontwand 38 schematisch dargestellt ist. In der Frontwand befindet sich eine Apertur, hinter der eine Objektivanordnung 26 angeordnet ist, die aus einem oder mehreren Objektiven besteht, die Licht 24 aus der Umgebung 40 fokussiert, so dass es als Licht 30 auf den Farbbildsensor 16 fällt. Die Umgebung 40 wird dabei mit Hilfe von Aufnahme-Beleuchtungs-LEDs 10, 12 beleuchtet, die Beleuchtungslichtkegel 22 bzw. 20 aufweisen. Selbstverständlich kann auch eine andere Anzahl von Aufnahme-Beleuchtungs-LEDs vorgesehen sein.

Das Licht 30, das von der Objektivanordnung 26 auf den Farbbildsensor 16 abgebildet wird, kann gegebenenfalls auch noch durch einen optischen Filter 28 geführt werden.

Der Farbbildsensor ist z.B. ein an sich bekanntes, farbempfindliches CCD-Array, dessen Signale durch eine Auswerteeinheit 17 ausgewertet werden. Hinter der Objektivanordnung 26 befindet sich bei der beschriebenen Ausgestaltung des Kamerasystems eine Referenz-LED 14 in unmittelbarer Nachbarschaft zu dem Farbbildsensor 16. "Hinter" soll hier so verstanden werden, dass das von der Referenz-LED abgestrahlte Licht den Farbbildsensor 16 erreichen kann, ohne durch die Objektivanordnung zu treten. Mit Hilfe eines Diffusors 32 wird das Licht dieser Referenz-LED auf den Farbbildsensor 16 gelenkt. Um eine direkte Beleuchtung einzuschränken, kann eine Blende 34 vorgesehen sein, so dass nur solches Licht auf den Farbbildsensor 16 trifft, das durch den Diffusor in einer Weise aufgeweitet ist, dass eine homogene spektrale Ausleuchtung des Farbbildsensors 16 gewährleistet ist.

Sowohl die Aufnahme-Beleuchtungs-LEDs als auch die Referenz-LED sind bei dem beschriebenen Beispiel Weißlicht-LEDs. In einer nicht gezeigten Ausgestaltung umfassen diese Beleuchtungslichtquellen in an sich bekannter Weise drei LEDs (Rot, Grün und Blau), um weißes Licht simulieren zu können.

Mit der beschriebenen Kamerasystemausgestaltung lässt sich ein erfindungsgemäßes Verfahren wie folgt durchführen.

Vor dem eigentlichen Betrieb des Kamerasystems wird ein Weißlichtabgleich durchgeführt. Dazu wird eine Bildaufnahme eines Referenzobjekts mit homogener Remission durchgeführt, das in die Umgebung 40 gebracht wird. Für diese erste Bildaufnahme werden nur die Beleuchtungs-LEDs 10 und 12 betrieben. Das Referenzobjekt kann auch durch den Hintergrund, z.B. das Förderband 18 gebildet werden.

Eine zweite Bildaufnahme desselben externen Referenzobjekts an derselben Stelle wird ohne Beleuchtung durch die Beleuchtungs-LEDs 10, 12 und ohne Beleuchtung durch die Referenz-LED durchgeführt. So lässt sich bereits das Fremdlicht bestimmen, das vor dem eigentlichen Betrieb zu berücksichtigen ist.

Als Drittes wird vor dem eigentlichen Betrieb mit der internen Referenzleuchtdiode 14 und ohne die Beleuchtungs-LEDs 10, 12 eine Bildaufnahme gemacht, um die Eigenschaften des Objektivs herauszufinden.

Man erhält auf diese Weise die Möglichkeit, die Farbeigenschaften des Objektivs und des Fremdlichts zu bestimmen und Korrekturwerte für den Weißlichtabgleich festzulegen.

Um die Umgebungseinflüsse bei der dritten beschriebenen Bildaufnahme mit der internen Referenz-LED 14 zu reduzieren, kann die Belichtungszeit kurz gehalten werden. Dies ist insbesondere möglich, da die optische Bestrahlung des Bildsensors 16 durch die räumliche Nähe der Referenz-LED 14 sehr hoch ist.

Bei dem Weißlichtabgleich liegen die beschriebenen drei Bildaufnahmen vor. Aufgrund der spektralen Eigenschaften der Kamerabeleuchtung, des Fremdlichts, der Objektivtransmission sowie der Quantenausbeute des Bildsensors sollten alle drei Farbkanäle (Rot, Grün, Blau) abgeglichen werden. Hierzu wird, wie beschrieben, das Hellbild vom Dunkelbild abgezogen und durch individuelle Verstärkung jedes einzelnen Farbkanals auf den gleichen Digitalwert normiert.

Während des eigentlichen Betriebes des Sensors werden dann zyklisch Zwischenbilder mit dem Farbbildsensor 16 aufgenommen, wobei die interne Referenz-LED 14 eingeschaltet ist, ohne dass die Beleuchtungs-LEDs 10, 12 leuchten. Aus der Veränderung dieser Zwischenbilder mit der Zeit können die Alterungs- und Temperatureffekte der Referenz-LED 14 bestimmt werden und auf diese Weise die mit der Beleuchtungs-LED aufgenommenen Bilder korrigiert werden.

Da die Referenz-LED 14 und die Beleuchtungs-LEDs 10, 12 chargengleich sind, werden sich Alterungs- und Temperatureffekte gleich auswirken, so dass aus den Alterungs- und Temperatureffekten der Referenz-LED 14 und deren Wirkung auf die Bildaufnahme mit dem Farbbildsensor 16 auf die entsprechenden Alterungs- und Temperatureffekte der Beleuchtungs-LEDs 10, 12 zurückgeschlossen werden.

Gegebenenfalls kann der Temperatureinfluss der Referenz-LED auch über eine relative Betrachtung der drei Farbkanäle zueinander herausgerechnet werden.

Eine Änderung des Fremdlichtpegels und/oder der spektralen Eigenschaften des Fremdlichts kann über zyklische Hell-/Dunkelbilder der Umgebung (also mit und ohne Beleuchtung durch die Beleuchtungs-LEDs 10, 12) jeweils ohne eingeschaltete Referenz-LED 14 einbezogen werden. Die so gebildeten Hell- bzw. Dunkelbilder können voneinander abgezogen werden, um den Fremdlichteinfluss zu berücksichtigen.

Ändert sich die Umgebung, kann dies dadurch berücksichtigt werden, dass sich bewegende Objekte gezielt über eine entsprechende Bildverarbeitung in der Auswerteeinheit 17 eliminiert oder nachverfolgt werden und nur die Daten von solchen Objekten berücksichtigt werden oder die Daten von solchen Objekten gerade nicht berücksichtigt werden. Eine andere Möglichkeit sieht vor, dass immer nur wenige Farbbildsensorzeilen mit und ohne Beleuchtung durch die Beleuchtungs-LEDs ausgelesen werden und voneinander abgezogen werden, um den Fremdlichteinfluss zu berücksichtigen.

Mit der erfindungsgemäßen Verfahrensführung ist es also möglich, ohne die Notwendigkeit eines sich zyklisch wiederholenden Weißlichtabgleichs trotzdem die Alterungs- und Temperatureffekte der Beleuchtungs-LEDs 10, 12 zu korrigieren. Um den Einfluss des sich gegebenenfalls ändernden Fremdlichtpegels zu berücksichtigen, müssen nur noch auf einfache Weise durchführbare Vergleiche zwischen zyklisch durchgeführten Hell-/Dunkelbildern der Umgebung durchgeführt werden.

Die erfindungsgemäß zum Einsatz kommende Referenz-Beleuchtungslichtquelle kann auch auf andere Weise vorteilhaft eingesetzt werden. So kann damit ein sogenannter "Fixed Pattern Noise" (FPN) korrigiert werden, bei dem es sich um ein räumliches Rauschen der Farbbildsensorpixel handelt. Ein solches räumliches Rauschen wird zum einen durch eine Ungleichmäßigkeit des Dunkelsignales ("Dark Signal Non-Uniformity") (DSNU), aber insbesondere auch durch die individuelle Pixelempfindlichkeit ("Photo Response Non-Uniformity") (PRNU) hervorgerufen. Während die DSNU berücksichtigt werden kann, indem während des Betriebes dunkle Zwischenbilder kurzer Belichtungszeit aufgenommen werden, kann insbesondere die PRNU mit der erfindungsgemäßen Anordnung über Zwischenbilder unter Beleuchtung mit der Referenzleuchtdiode 14 bestimmt und korrigiert werden. Eine Veränderung der räumlichen Empfindlichkeit des Farbbildsensors z.B. für unterschiedliche Wellenlängen kann auf diese Weise während des Betriebes überprüft und nachjustiert werden.

Zusätzlich zu der beschriebenen Referenz-LED können noch Fotodioden 36 mit vorgeschalteten Farbfiltern (Rot, Grün, Blau) in unmittelbarer Nachbarschaft zum Farbbildsensor 16 vorgesehen sein, die z.B. durch Streulicht des gesamten Kamerasystems beleuchtet werden. Mit einer solchen Anordnung kann anstelle der zyklischen Hell-/Dunkelbilder mit dem Farbbildsensor 16 beziehungsweise den Referenzbildern mit der Referenz-LED über eine spektrale Streulichtanalyse die spektrale Verteilung des Lichts in den belichteten und unbelichteten Zeitbereichen analysiert werden.

### Bezugszeichenliste

- 1: Kamerasystem
- 2: Objekt
- 10, 12: Aufnahme-LED
- 14: Referenz-LED
- 16: CCD-Farbbildsensor
- 17: Auswerteeinheit
- 18: Fläche
- 20, 22: Beleuchtungslichtkegel
- 26: Objektiv
- 28: optischer Filter
- 30: Remissionslicht
- 32: Diffusor
- 34: Blende
- 36: Fotodiode mit Farbfilter
- 38: Gehäusefrontwand
- 40: Umgebung

## Patentansprüche

1. Verfahren zur Inspektion und/oder Vermessung von Objekten (2) in einer Umgebung (40), mit einem in einem Gehäuse mit einer Frontwand (38) vorgesehenen Kamerasystem (1), das folgendes umfasst:
einen Farbbildsensor (16), eine Objektivanordnung (26) vor dem Farbbildsensor (16) zur Abbildung eines Objektes (2) aus der Umgebung (40) auf dem Farbbildsensor (16), wenigstens eine Aufnahme-Beleuchtungslichtquelle (10, 12) in der Frontwand (38), mit der die Umgebung (40) mit nicht-monochromatischem Licht beleuchtet werden kann, insbesondere ohne dass es direkt durch die Objektivanordnung (26) tritt, und wenigstens eine interne, innerhalb des Kamerasystems vorgesehene Referenz-Beleuchtungslichtquelle (14), die derart angeordnet ist, dass der Farbbildsensor (16) mit ihr beleuchtet werden kann, ohne dass das dazu von ihr abgestrahlte Licht durch die Objektivanordnung (26) tritt, wobei die wenigstens eine Referenz-Beleuchtungslichtquelle (14) und die wenigstens eine Aufnahme-Beleuchtungslichtquelle (10, 12) untereinander bau- und chargengleich sind,
wobei
während des Betriebs des Kamerasystems (1) zyklisch Zwischenbilder oder Teilzwischenbilder unter Beleuchtung des Farbbildsensors (16) nur mit der wenigstens einen internen Referenz-Beleuchtungslichtquelle (14) und ohne Beleuchtung mit der wenigstens einen Aufnahme-Beleuchtungslichtquelle (10, 12) aufgenommen und in Beziehung zu Bildern gesetzt werden, die unter Beleuchtung mit der wenigstens einen Aufnahme-Beleuchtungslichtquelle (10, 12) aufgenommen werden, um Alterungs- und Temperatureffekte der wenigstens einen Aufnahme-Beleuchtungslichtquelle (10, 12) zu korrigieren.

2. Verfahren nach Anspruch 1, bei dem die wenigstens eine Aufnahme-Beleuchtungslichtquelle (10, 12) und die wenigstens eine interne Referenz-Beleuchtungslichtquelle (14) jeweils durch wenigstens eine LED, vorzugsweise eine Weißlicht-LED, gebildet sind.

3. Verfahren nach einem der Ansprüche 1 bis 2, bei dem die wenigstens eine Aufnahme-Beleuchtungslichtquelle und die wenigstens eine Referenz-Beleuchtungslichtquelle jeweils wenigstens drei Einzellichtquellen umfassen, die insbesondere rotes, grünes und blaues Licht abstrahlen.

4. Verfahren nach einem der Ansprüche 1 bis 3, bei dem die wenigstens eine interne Referenz-Beleuchtungslichtquelle (14) derart ausgestaltet und angeordnet ist, dass sie den Farbbildsensor (16) spektral homogen ausleuchtet.

5. Verfahren nach einem der Ansprüche 1 bis 4, bei dem sich keine zu durchstrahlenden optischen Elemente im Strahlengang zwischen der wenigstens einen internen Referenz-Beleuchtungslichtquelle (14) und dem Farbbildsensor (16) befinden.

6. Verfahren nach einem der Ansprüche 1 bis 5, bei dem vor dem Betrieb
(i) ein Bild eines bekannten Referenzobjekts unter Beleuchtung mit der wenigstens einen Aufnahme-Beleuchtungslichtquelle (10, 12),
(ii) ein Bild des bekannten Referenzobjekts ohne Beleuchtung und
(iii) ein Bild unter Beleuchtung nur mit der wenigstens einen internen Referenz-Beleuchtungslichtquelle (14)
aufgenommen werden.

7. Verfahren nach einem der Ansprüche 1 bis 6, bei dem während des Betriebes zyklisch Hell-/Dunkelbilder der Umgebung (40) aufgenommen und in Beziehung zueinander gesetzt werden, um den Einfluss von Umgebungslicht zu korrigieren, wobei die Hellbilder unter Beleuchtung nur mit der wenigstens einen Aufnahme-Beleuchtungslichtquelle (10, 12) und die Dunkelbilder ohne Beleuchtung aufgenommen werden.

8. Verfahren nach einem der Ansprüche 1 bis 7, bei dem während des Betriebs zyklisch Zwischenbilder oder Teilzwischenbilder unter Beleuchtung des Farbbildsensors (16) nur mit der wenigstens einen internen Referenz-Beleuchtungslichtquelle (14) aufgenommen werden, um räumliche Inhomogenitäten der spektralen Empfindlichkeit zu berücksichtigen.

9. Verfahren nach einem der Ansprüche 1 bis 8, bei dem jeweils nur die Daten von einem Teil des Farbbildsensors (16) ausgelesen werden, um z.B. einer sich schnell ändernden Umgebung oder eines sich schnell bewegenden Objektes gerecht werden zu können.

## Claims

1. A method of inspecting and/or measuring objects (2) in an environment (40) using a camera system (1) which is provided in a housing having a front wall (38) and which comprises the following:
a color image sensor (16); an objective arrangement (26) in front of the color image sensor (16) for imaging an object (2) from the environment (40) on the color image sensor (16); at least one taking illumination light source (10, 12) in the front wall (38) with which the environment (40) can be illuminated by non-monochromatic light, in particular without passing directly through the objective arrangement (26); and at least one internal reference illumination light source (14) which is provided within the camera system and which is arranged such that the color image sensor (16) can be illuminated by it without the light irradiated by it for this purpose passing through the objective arrangement (26), wherein the at least one reference illumination light source (14) and the at least one taking illumination light source (10, 12) are of mutually the same construction and batch;
wherein
intermediate images or intermediate part images are taken cyclically during the operation of the camera system (1) under illumination of the color image sensor (16) only by the at least one internal reference illumination light source (14) and without illumination by the at least one taking illumination light source (10, 12) and are put into relation with images which are taken under illumination by the at least one taking illumination light source (10, 12) in order to correct aging and temperature effects of the at least one taking illumination light source (10, 12).

2. A method in accordance with claim 1, in which the at least one taking illumination light source (10, 12) and the at least one internal reference illumination light source (14) are each formed by at least one LED, preferably by a white light LED.

3. A method in accordance with one of the claims 1 to 2, in which the at least one taking illumination light source and the at least one reference illumination light source each comprise at least three individual light sources which in particular irradiate red, green and blue light.

4. A method in accordance with any one of the claims 1 to 3, in which the at least one internal reference illumination light source (14) is configured and arranged such that it illuminates the color image sensor (16) spectrally homogeneously.

5. A method in accordance with any one of the claims 1 to 4, in which no optical elements to be irradiated are located in an optical path between the at least one internal reference illumination light source (14) and the color image sensor (16).

6. A method in accordance with any one of the claims 1 to 5, in which
(i) an image is taken of a known reference object under illumination by the at least one taking illumination light source (10, 12);
(ii) an image is taken of the known reference object without illumination; and
(iii) an image is taken under illumination only by the at least one internal reference illumination light source (14) before the operation.

7. A method in accordance with any one of the claims 1 to 6, in which light/dark images of the environment (40) are taken cyclically during operation and are put into relation with one another to correct the influence of environmental light, wherein the light images are taken under illumination only by the at least one taking illumination light source (10, 12) and the dark images are taken without illumination.

8. A method in accordance with any one of the claims 1 to 7, in which intermediate images or intermediate part images are taken cyclically under illumination of the color image sensor (16) only by the at least one internal reference illumination light source (14) during operation to take account of spatial inhomogeneities of the spectral sensitivity.

9. A method in accordance with any one of the claims 1 to 8, in which only the data from a part of the color image sensor (16) are respectively read out in order e.g. to be able to be suitable for a fast-changing environment or a fast-moving object.

## Revendications

1. Procédé pour l'inspection et/ou pour la mesure d'objets (2) dans un environnement (40), comprenant un système à caméra (1) prévu dans un boîtier avec une paroi frontale (38), qui inclut les éléments suivants :
un capteur d'image en couleurs (16), un agencement formant objectif (26) devant le capteur d'image en couleurs (16) pour former l'image d'un objet (2) à partir de l'environnement (4) sur le capteur d'image en couleurs (16), au moins une source lumineuse d'éclairage de prise de vue (10, 12) dans la paroi frontale (38), avec laquelle l'environnement (40) peut être éclairé avec une lumière qui n'est pas monochromatique, en particulier sans que cette lumière passe directement à travers l'agencement formant objectif (26), et au moins une source de lumière d'éclairage de référence interne (14), prévue à l'intérieur du système à caméra, qui est agencée de telle façon que le capteur d'image en couleurs (16) peut être éclairé au moyen de celle-ci, sans que la lumière rayonnée par celle-ci à cet effet passe à travers l'agencement formant objectif (26), dans lequel ladite au moins une source de lumière d'éclairage de référence (14) et ladite au moins une source de lumière d'éclairage de prise de vue (10, 12) sont identiques l'une à l'autre en termes structurels et en termes de charge,
dans lequel
pendant le fonctionnement du système à caméra (1) des images intermédiaires ou des images intermédiaires partielles sont enregistrées en éclairant le capteur d'image en couleurs (16) uniquement avec ladite au moins une source de lumière d'éclairage de référence interne (14) et sans éclairage avec ladite au moins une source de lumière d'éclairage de prise de vue (10, 12) et mises en relation avec des images qui sont enregistrées sous un éclairage avec ladite au moins une source de lumière d'éclairage de prise de vue (10, 12), afin de corriger des effets de vieillissement et de température de ladite au moins une source de lumière d'éclairage de prise de vue (10, 12).

2. Procédé selon la revendication 1, dans lequel ladite au moins une source de lumière d'éclairage de prise de vue (10, 12) et ladite au moins une source de lumière d'éclairage de référence interne (14) sont formées respectivement par au moins une diode électroluminescente, de préférence une diode électroluminescente en lumière blanche.

3. Procédé selon l'une des revendications 1 et 2, dans lequel ladite au moins une source de lumière d'éclairage de prise de vue et ladite au moins une source de lumière d'éclairage de référence incluent chacune au moins deux sources de lumière individuelles, qui rayonnent particulier de la lumière rouge, verte et bleue.

4. Procédé selon l'une des revendications 1 à 3, dans lequel ladite au moins une source de lumière d'éclairage de référence interne (14) est conçue et agencée de telle façon qu'elle éclaire le capteur d'image en couleurs (16) de façon homogène sur le plan spectral.

5. Procédé selon l'une des revendications 1 à 4, dans lequel aucun élément optique à faire traverser par le rayonnement se trouve dans le trajet du rayonnement entre ladite au moins une source de lumière d'éclairage de référence interne (14) et le capteur d'image en couleurs (16).

6. Procédé selon l'une des revendications 1 à 5, dans lequel, avant le fonctionnement on enregistre
(i) une image d'un objet de référence connu sous éclairage avec ladite au moins une source de lumière d'éclairage de prise de vue (10, 12),
(ii) une image de l'objet de référence connu sans éclairage, et
(iii) une image sous éclairage uniquement avec ladite au moins une source de lumière d'éclairage de référence interne (14).

7. Procédé selon l'une des revendications 1 à 6, dans lequel, pendant le fonctionnement, on enregistre cycliquement des images claires/obscures de l'environnement (40) et on les met en relation les unes avec les autres, afin de corriger l'influence de la lumière ambiante, de sorte que les images claires sont enregistrées sous éclairage uniquement avec ladite au moins une source de lumière d'éclairage de prise de vue (10, 12) et les images sombres sont enregistrées sans éclairage.

8. Procédé selon l'une des revendications 1 à 7, dans lequel pendant le fonctionnement, on enregistre de façon cyclique des images intermédiaires ou des images intermédiaires partielles sous éclairage du capteur d'image en couleurs (16) uniquement avec ladite au moins une source de lumière d'éclairage de référence interne (14), afin de prendre en compte des défauts d'homogénéité spatiaux de la sensibilité spectrale.

9. Procédé selon l'une des revendications 1 à 8, dans lequel respectivement seules les données d'une partie du capteur d'image en couleurs (16) sont lues, par exemple afin de pouvoir traiter correctement un environnement qui se modifie rapidement ou un objet qui se déplace rapidement.
